# EUROPÄISCHE PATENTSCHRIFT

(11) **EP 3 303 935 B1**
(45) Veröffentlichungstag und Bekanntmachung des Hinweises auf die Patenterteilung: **12.08.2020**
(21) Anmeldenummer: 15777606.3
(22) Anmeldetag: 24.09.2015
(51) Int. Cl.: F24D 19/10, H04B 3/54

(54) **VORRICHTUNG UND VERFAHREN ZUM STEUERN EINER HEIZUNGS- UND/ODER KÜHLANLAGE**
DEVICE AND METHOD FOR CONTROLLING A HEATING AND/OR COOLING SYSTEM
DISPOSITIF ET PROCÉDÉ DE COMMANDE D'UNE INSTALLATION DE CHAUFFAGE ET/OU DE CLIMATISATION

(30) Priorität: 25.09.2014 DE 102014014491
(43) Veröffentlichungstag der Anmeldung: 11.04.2018
(73) Patentinhaber: tado GmbH, 80637 München (DE)
(72) Erfinder: GEPPERTH, Jürgen, 81539 München (DE)
(74) Vertreter: Ridderbusch, Oliver
(86) Internationale Anmeldenummer: PCT/EP2015/001896
(87) Internationale Veröffentlichungsnummer: WO 2016/045796

(56) Entgegenhaltungen:
- EP-A1- 2 484 988
- WO-A2-2009/144710
- WO-A2-2012/137178
- DE-A1- 2 438 702
- DE-A1-102004 030 767
- DE-C1- 19 539 452
- US-A- 5 798 945
- US-A1- 2013 182 781

## Beschreibung

### GEBIET DER ERFINDUNG

Die vorliegende Offenbarung betrifft eine Vorrichtung zum Steuern einer Heizungs- und/oder Kühlanlage nach dem Oberbegriff des Anspruchs 1 und ein Verfahren zum Steuern einer Heizungs- und/oder Kühlanlage nach dem Oberbegriff des Anspruchs 12.

Eine Heizungs- und/oder Kühlanlage kann eine beliebige Anlage darstellen, die eine Temperatur in einem Raum oder Gebäude beeinflusst oder steuert. Solche Anlagen können auch als HVAC-Anlagen (englisch: Heating, Ventilation and Air Conditioning) bezeichnet werden.

### HINTERGRUND DER ERFINDUNG

Heizungs- und/oder Kühlanlagen sind verhältnismäßig kostenintensive Anlagen, die für lange Nutzungsdauern ausgelegt sind. Üblicherweise verfügen bestehende oder ältere Heizungs- und/oder Kühlanlage dadurch über eine Steuerung, die im Vergleich zu einer modernen Steuerung verhältnismäßig einfach ausgeführt ist. Dies führt zu einem oftmals unnötig starken Heizen oder einem unnötig starken Kühlen, womit prinzipiell vermeidbare Heiz- oder Kühlkosten einhergehen. Zudem ist bei solchen Steuerungen der Komfort auch häufig durch zu geringes Heizen oder Kühlen geschmälert.

Daher besteht ein Bedürfnis, nachträglich eine bestehende Heizungs- und/oder Kühlanlage um eine intelligente Steuerungsvorrichtung zu ergänzen, welche gemäß den aktuellen technischen Möglichkeiten für möglichst geringe Energiekosten sorgt und gleichzeitig einen möglichst großen Benutzerkomfort bereitstellt.

Eine solche Steuerungsvorrichtung wird mit der zu steuernden Heizungs- und/oder Kühlanlage für eine bidirektionale Kommunikation verbunden. Über diese Verbindung kann auch eine Energieversorgung der Vorrichtung ermöglicht werden.

Hierzu umfasst eine gattungsgemäße Vorrichtung zum Steuern einer Heizungs- und/oder Kühlanlage zumindest die folgenden Komponenten:
- eine Kommunikationsschnittstelle, an welche zur Datenübertragung und Energieversorgung eine Heizungs- und/oder Kühlanlage anschließbar ist;
- Spannungsumwandlungsmittel zum Umwandeln einer an der Kommunikationsschnittstelle anliegenden Eingangsspannung auf eine hiervon verschiedene Gleichspannung;
- elektronische Energieverteilungsmittel zur elektrischen Energieversorgung von elektronischen Komponenten der Vorrichtung mittels der von den Spannungsumwandlungsmitteln ausgegebenen Gleichspannung;
- Signalauswertemittel zum Auswerten eines von der Heizungs- und/oder Kühlanlage an die Kommunikationsschnittstelle gegebenen elektrischen Signals; und
- Signalausgabemittel, welche für ein Ausgeben eines Steuerbefehls an die Heizungs- und/oder Kühlanlage dazu eingerichtet sind, ein moduliertes elektrisches Signal an der Kommunikationsschnittstelle zu erzeugen.

In entsprechender Weise ist bei einem gattungsgemäßen Verfahren zum Steuern einer Heizungs- und/oder Kühlanlage, insbesondere mittels einer gattungsgemäßen Vorrichtung, vorgesehen, dass zumindest die folgenden Schritte durchgeführt werden:
- Erzeugen einer Eingangsspannung an einer Kommunikationsschnittstelle der Vorrichtung durch eine an die Kommunikationsschnittstelle angeschlossene Heizungs- und/oder Kühlanlage;
- Umwandeln der Eingangsspannung mit Spannungsumwandlungsmitteln auf eine hiervon verschiedene Gleichspannung;
- Bereitstellen einer Energieversorgung von Komponenten der Vorrichtung über die von den Spannungsumwandlungsmitteln ausgegebene Gleichspannung;
- Auswerten eines von der Heizungs- und/oder Kühlanlage an die Kommunikationsschnittstelle gegebenen elektrischen Signals; und
- Ausgeben eines Steuerbefehls an die Heizungs- und/oder Kühlanlage, indem Signalausgabemittel der Vorrichtung ein moduliertes elektrisches Signal an der Kommunikationsschnittstelle erzeugen;
Solch eine gattungsgemäße Vorrichtung und ein gattungsgemäßes Verfahren sind von der Anmelderin in der deutschen Patentanmeldung DE 10 2012 021 509 A1 besch rieben.

Bei dem elektrischen Signal, das von der Heizungs- und/oder Kühlanlage an der Kommunikationsschnittstelle erzeugt wird, kann es sich um eine Modulation der Eingangsspannung handeln. In diesem Fall wird also ein Digitalsignal in der Eingangsspannung moduliert, indem die Eingangsspannung abwechselnd einen hohen und einen niedrigen Spannungspegel annimmt.

Alternativ kann das elektrische Signal, das von der Heizungs- und/oder Kühlanlage an der Kommunikationsschnittstelle erzeugt wird, ein Strom sein. Ein Digitalsignal wird also als modulierter Strom übertragen, welcher abwechselnd einen hohen und einen niedrigen Strompegel hat.

Aufgrund umfangreicher Funktionen der Vorrichtung kann ihr Energiebedarf verhältnismäßig hoch sein. Der Energieverbrauch wird bei gängigen Vorrichtungen auch dadurch erhöht, dass als Spannungsumwandlungsmittel üblicherweise Linearregler verwendet werden. Diese bieten zwar den Vorteil, dass ein Stromverbrauch weitgehend unabhängig von der Eingangsspannung ist. Jedoch haben sie einen sehr niedrigen Wirkungsgrad von beispielsweise weniger als 20%. Mit dem insgesamt hohen Energieverbrauch einer solchen Vorrichtung geht eine große Wärmeentwicklung einher.

In Vorarbeiten der Anmelderin wurde erkannt, dass diese Wärmeentwicklung einen Temperatursensor der Vorrichtung nachteilig beeinflussen kann. Es wurde weiter erkannt, dass andere gängige Spannungsumwandlungsmittel, welche zwar aufgrund eines höheren Wirkungsgrads einen geringen Wärmetransfer zum Temperatursensor bewirken, zu einer Verzerrung der Eingangsspannung führen. Ein in der Eingangsspannung moduliertes Signal der Heizungs- und/oder Kühlanlage wird dadurch soweit verzerrt, dass es nicht mehr korrekt gelesen werden kann.

WO2009144710A2 beschreibt eine Steuervorrichtung für einen elektrisch beheizten Wassertank. DE19539452C1 offenbart einen Repeater, der Spannungen zwischen zwei Bussystemen überträgt. Die Spannungen können eine Versorgungsspannung mit aufmodulierten Daten darstellen. Der Repeater umfasst zwei Übertragungskanäle, von denen der eine Übertragungskanal die Daten übertragen soll und der andere Übertragungskanal allein die Versorgungsspannung übertragen soll. Dazu umfasst er Mittel zum Herausfiltern der höherfrequenten Datensignale.

### AUFGABE DER ERFINDUNG

Als Aufgabe der vorliegenden Erfindung kann erachtet werden, eine Vorrichtung und ein Verfahren zum Steuern einer Heizungs- und/oder Kühlanlage anzugeben, welche bei geringem Energiebedarf eine möglichst fehlerfreie Kommunikation mit Heizungs- und/oder Kühlanlagen ermöglichen.

### BESCHREIBUNG DER ERFINDUNG

Diese Aufgabe wird durch die Vorrichtung gemäß Anspruch 1 und das Verfahren nach Anspruch 12 gelöst.

Vorteilhafte Varianten der Vorrichtung und des Verfahrens der Erfindung sind in den abhängigen Ansprüchen angegeben und in der folgenden Beschreibung dargelegt.

Die oben beschriebene, gattungsgemäße Vorrichtung ist gemäß der Erfindung dadurch weitergebildet, dass als Spannungsumwandlungsmittel ein DC-DC-Wandler vorgesehen ist, wobei zum Erhöhen einer Eingangskapazität des DC-DC-Wandlers an dessen Eingang mindestens ein Kondensator verbunden ist. Außerdem umfasst die Vorrichtung eine Entkopplungsschaltung, welche zwischen der Kommunikationsschnittstelle und dem DC-DC-Wandler angeordnet und dazu eingerichtet ist, eine Beeinflussung der Eingangsspannung an der Kommunikationsschnittstelle aufgrund des Kondensators zu verringern.

In entsprechender Weise ist das oben beschriebene, gattungsgemäße Verfahren gemäß der Erfindung dadurch gekennzeichnet, dass zumindest die folgenden Schritte ausgeführt werden:
- Verwenden eines DC-DC-Wandlers als Spannungsumwandlungsmittel, wobei zum Erhöhen einer Eingangskapazität des DC-DC-Wandlers an dessen Eingang mindestens ein Kondensator verbunden ist; und
- Verwenden einer Entkopplungsschaltung zwischen der Kommunikationsschnittstelle und dem DC-DC-Wandler, wobei die Entkopplungsschaltung dazu eingerichtet ist, eine Beeinflussung der Eingangsspannung an der Kommunikationsschnittstelle aufgrund des Kondensators zu verringern.

Als ein erster wesentlicher Gedanke der Erfindung werden keine Spannungsumwandlungsmittel eingesetzt, die einen niedrigen Wirkungsgrad von weniger als 50% oder sogar 20% haben, wie es beispielsweise bei Linearreglern der Fall ist. Vielmehr wird erfindungsgemäß ein DC-DC-Wandler genutzt. Dieser ist ein Schaltregler, welcher durch einen hohen Wirkungsgrad von vorzugsweise über 60% oder 80% für eine geringe Wärmeentwicklung sorgt. Eine Temperaturmessung in oder an der erfindungsgemäßen Vorrichtung wird dadurch vorteilhafterweise nicht oder nur kaum beeinflusst.

Weil ein Schaltregler einen Strom schubweise entnimmt, benötigt er an seinem Eingang einen Kondensator, der eine verhältnismäßig hohe Eingangskapazität bildet. Diese Eingangskapazität führt zu Problemen, deren Lösung wesentlicher Teil der Erfindung ist:
Zur Übertragung eines Signals an die Steuervorrichtung erzeugen manche Heizungs- und/oder Kühlanlagen eine modulierte Eingangsspannung an der Kommunikationsschnittstelle. Um dieses Signal zu lesen, müssen die Signalauswertemittel der Vorrichtung korrekt hohe und niedrige Spannungspegel der Eingangsspannung erkennen können. Ohne weitere Maßnahmen wird bei einer fallenden Spannungsflanke, wo die Eingangsspannung idealerweise von ihrem hohen auf ihren niedrigen Pegel fällt, jedoch ein Entladestrom vom Kondensator zurück zur Kommunikationsschnittstelle fließen. Dadurch sinkt die Eingangsspannung schwächer als gewünscht. Es wird also nicht (oder zumindest nur verzögert) der niedrige Pegel erreicht.

In ähnlicher Weise würde ein Anstieg der Eingangsspannung vom niedrigen auf den hohen Pegel durch das Aufladen des Kondensators verzögert. Der Kondensator bewirkt also eine Glättung oder Filterung der Eingangsspannung, wodurch der Unterschied zwischen hohem und niedrigem Pegel verloren oder zumindest verringert wird. Es ist dann nicht mehr möglich, ein Signal aus der Eingangsspannung fehlerfrei zu lesen.

Dieser Nachteil wird durch die Entkopplungsschaltung der Erfindung vermieden. Diese wird zwischen der Kommunikationsschnittstelle und dem DC-DC-Wandler verbunden. Sie entkoppelt weitgehend die Spannung an der der Kommunikationsschnittstelle von Auswirkungen der Lade- und Entladeströme des Kondensators am Eingang des DC-DC-Wandlers.

Zu diesem Zweck schwächt die Entkopplungsschaltung vorzugsweise Ladeströme des Kondensators ab und hemmt Entladeströme des Kondensators zurück zur Kommunikationsschnittstelle. Unter dem Abschwächen eines Ladestroms soll verstanden werden, dass eine zeitliche Änderung des Stroms verringert wird. Die Entkopplungsschaltung erhöht demnach die Zeitdauer zum Aufbau eines Ladestroms des Kondensators. Unter dem Hemmen des Entladestroms kann verstanden werden, dass ein Entladestrom zurück zur Heizungs- und/oder Kühlanlage (also entgegen der ansonsten vorliegenden Stromflussrichtung) verringert oder vollständig vermieden wird.

Als ein wesentlicher Vorteil wird hierdurch eine durch den Kondensator bedingte Glättung der Eingangsspannung vermieden oder abgeschwächt. Steigende und fallende Flanken der Eingangsspannungen bleiben demnach weitgehend erhalten. Ein Signal kann aus der Eingangsspannung an der Kommunikationsschnittstelle (vor der Entkopplungsschaltung) korrekt gelesen werden. Gleichzeitig wird eine störende Wärmeentwicklung gering gehalten, indem ein DC-DC-Wandler mit vergleichsweise hohem Wirkungsgrad verwendet werden kann.

Die Kommunikationsschnittstelle verfügt über Anschlussverbindungen von elektrischen Leitungen zur Heizungs- und/oder Kühlanlage. Innerhalb der erfindungsgemäßen Vorrichtung sind die Anschlussverbindungen mit Komponenten der Vorrichtung elektrisch verbunden, etwa mit der Entkopplungsschaltung. Die Kommunikationsschnittstelle verfügt über einen 1-Wire Bus, bei welchem bloß zwei elektrische Leitungen für eine bidirektionale Kommunikation sowie für eine Energieübertragung zu der Vorrichtung genutzt werden. Weitere elektrische Leitungen können bei der erfindungsgemäßen Vorrichtung für zusätzliche Funktionen vorhanden sein, beispielsweise für die Signalausgabe als eine Analogspannung.

Die von der Heizungs- und/oder Kühlanlage an der Kommunikationsschnittstelle bereitgestellte Eingangsspannung wird von der erfindungsgemäßen Vorrichtung zur Energieversorgung genutzt. Ein elektrisches Signal wird von manchen Heizungs- und/oder Kühlanlagen durch eine Modulation der Eingangsspannung gesendet. Um solche Informationen zu lesen, können die Signalauswertemittel der Vorrichtung dazu eingerichtet sein, die Eingangsspannung auszuwerten. Dies erfolgt zwischen der Kommunikationsschnittstelle und der Entkopplungsschaltung, damit hohe und niedrige Spannungspegel möglichst wenig durch den Kondensator verzerrt bzw. geglättet sind. Andere Heizungs- und/oder Kühlanlagen senden ein Signal, indem sie einen Strom zur Kommunikationsschnittstelle modulieren. Die Eingangsspannung selbst wird hier nicht zur Signalübertragung von der Heizungs- und/oder Kühlanlage genutzt. Um auch solche Informationen lesen zu können, sind die Signalauswertemittel vorzugsweise dazu eingerichtet, einen Stromverlauf an der Kommunikationsschnittstelle zu messen.

Die Signalausgabemittel der Vorrichtung können für die Ausgabe eines Steuerbefehls dazu gestaltet sein:
- eine modulierte Eingangsspannung an der Kommunikationsschnittstelle bereitzustellen, und/oder
- einen modulierten Strom an der Kommunikationsschnittstelle auszugeben, und/oder
- über eine weitere elektrische Leitung die Höhe einer Analogspannung einzustellen.

In den ersten beiden vorgenannten Fällen wird ein Digitalsignal mit abwechselnd hohem und niedrigem Pegel erzeugt. Dabei werden dieselben elektrischen Anschlüsse und Leitungen genutzt, die auch zum Empfang eines Signals der Heizungs- und/oder Kühlanlage verwendet werden. Aus diesem Grund kann vorgesehen sein, dass die Vorrichtung und die Heizungs- und/oder Kühlanlage abwechselnd Informationen senden.

Der DC-DC-Wandler wird auch als Gleichspannungswandler bezeichnet und kann in prinzipiell beliebiger Weise gebildet sein, solange dessen Wirkungsgrad zur Vermeidung unnötiger Wärmeentwicklungen ausreichend hoch ist, beispielsweise großer als 50% oder 60% ist. So kann als Gleichspannungswandler insbesondere ein Buck/Boost Converter verwendet werden.

Die Energieverteilungsmittel versorgen einige oder sämtliche der Komponenten der Vorrichtung mit Energie, die über die Kommunikationsschnittstellte und den DC-DC-Wandler bereitgestellt wird. Zu diesen Komponenten können insbesondere ein Temperatursensor, die Signalauswertemittel, die Signalausgabemittel, Steuer- und Auswertemittel (welche durch einen Mikrocontroller gebildet sein können), Funkmittel zur Kommunikation mit anderen Geräten und weitere Schaltungen gehören.

Bevorzugt umfasst die Entkopplungsschaltung zum Abschwächen von Ladeströmen des Kondensators mindestens eine Drosselspule. Diese kann auch als Spule oder Drossel bezeichnet werden. Die Spule kann in Reihe vor den Kondensator geschaltet sein. Bei einem sprunghaften Spannungsanstieg bewirkt sie eine Verzögerung, das heißt einen allmählichen Anstieg des Stroms.

Zum Hemmen von Entladeströmen des Kondensators zurück zur Kommunikationsschnittstelle kann die Entkopplungsschaltung mindestens eine Diode aufweisen, die vom Kondensator zur Kommunikationsschnittstelle in Sperrrichtung angeordnet ist. Dies verhindert einen Entladestrom vom Kondensator in Richtung der Kommunikationsschnittstelle. Zweckmäßigerweise sind die Eigenschaften der Diode abhängig von der genutzten Höhe/Amplitude der Spannungsmodulation gewählt, um für diese Spannungsdifferenzen eine Entladung vom Kondensator zur Kommunikationsschnittstelle zu vermeiden.

Die Drosselspule ist bevorzugt zwischen der Diode und dem Kondensator angeordnet. Dadurch verhindert die Diode einen Entladestrom zur Kommunikationsschnittstelle nicht nur von dem Kondensator, sondern auch von der Spule.

Der Kondensator kann direkt mit dem Eingang des DC-DC-Wandlers verbunden sein. Alternativ können auch Elemente hierzwischen angeordnet sein, solange diese nicht verhindern, dass der DC-DC-Wandler von dem Kondensator einen genügend großen Strom und genügend schnell aufnimmt. Allgemein können unter dem Kondensator solche elektrotechnischen Mittel aufgefasst werden, die eine vorübergehende Ladungsspeicherung und eine schnelle Ladungsaufnahme und -abgabe ermöglichen, das heißt, schnell genug für den Betrieb des DC-DC-Wandlers.

Die Entkopplungsschaltung führt zwar erfolgreich dazu, dass eine modulierte Eingangsspannung an der Kommunikationsschnittstelle fehlerfrei gelesen werden kann. Jedoch ist durch die Entkopplungsschaltung und den Kondensator eine Stromaufnahme nicht mehr unabhängig von der Eingangsspannung. Idealerweise sollte ein Strom etwa konstant sein, während die Eingangsspannung durch die Heizungs- und/oder Kühlanlage moduliert wird. Sinkt die Eingangsspannung jedoch auf ihren niedrigen Pegel, so verhindert die Sperrwirkung der Diode der Entkopplungsschaltung einen Stromfluss. Der Strom bleibt also nicht etwa konstant, sondern sinkt sprunghaft Richtung null. Bei einem Anstieg der Eingangsspannung vom niedrigen auf den hohen Pegel fließt ein Ladestrom des Kondensators. Zwar wird dieser Ladestrom durch die Spule der Entkopplungsschaltung abgeschwächt, das heißt, sein Anstieg wird verlangsamt. Dennoch kann der Ladestrom eine Höhe erreichen, die größer ist als eine Stromhöhe bei konstanter Eingangsspannung. Bei einem Anstieg der Eingangsspannung auf vom niedrigen auf den hohen Pegel wird also die Stromstärke zunächst von etwa null auf ein Maximum steigen und sodann wieder abfallen. Bei manchen Heizungs- und/oder Kühlanlagen führen solche Stromänderungen zu unerwünschten Folgen.

Deshalb kann es wünschenswert sein, die oben dargelegten Stromänderungen aufgrund einer Modulation der Eingangsspannung zu vermeiden. Dies wird bei einer bevorzugten Ausführungsform der Erfindung erreicht. Bei dieser Ausführungsform ist eine Stromstabilisierungsschaltung zwischen der Kommunikationsschnittstelle und der Entkopplungsschaltung angeordnet. Die Stromstabilisierungsschaltung gibt einen (weitgehend) konstanten Strom aus. Indem sie vor der Entkopplungsschaltung angeordnet ist, wird der Strom an der Kommunikationsschnittstelle nicht mehr (oder zumindest weniger) durch die Entkopplungsschaltung und den nachfolgenden Kondensator beeinflusst. Vorteilhafterweise kann also durch die Stromstabilisierungsschaltung ein weitgehend konstanter Strom an der Kommunikationsschnittstelle auch dann erreicht werden, wenn die Eingangsspannung moduliert wird.

Eine solche Stromstabilisierung ist jedoch nicht für alle Heizungs- und/oder Kühlanlagen erforderlich. Sofern eine Heizungs- und/oder Kühlanlage angeschlossen ist, bei denen die oben genannten Stromvariationen unproblematisch sind, kann es wünschenswert sein, keine Stromstabilisierung zu nutzen. Dies kann insbesondere bei einer Signalübertragung durch Spannungsmodulation der Fall sein. Damit die Vorrichtung der Erfindung auch hierfür geeignet ist, kann eine Umgehungsleitung vorhanden sein. Diese verbindet die Kommunikationsschnittstelle mit der Entkopplungsschaltung und umgeht dabei die Stromstabilisierungsschaltung. Zudem ist ein Schalter vorhanden, mit dem auswählbar ist, ob die Umgehungsleitung oder die Stromstabilisierungsschaltung genutzt wird.

Eine Zuordnung, bei welcher Art von Heizungs- und/oder Kühlanlage die Stromstabilisierungsschaltung genutzt werden soll, kann in einer Liste gespeichert sein. Diese Liste kann insbesondere auf einem externen Server oder Steuercomputer gespeichert sein. Wird eine Heizungs- und/oder Kühlanlage ausgewählt, so ermittelt der Server anhand der Liste, ob die Stromstabilisierungsschaltung genutzt werden soll. Einen entsprechenden Auswahlbefehl sendet der Server an die Vorrichtung der Erfindung. Zum Empfang des Auswahlbefehls kann die Vorrichtung Funkmittel umfassen, welche eine Internetverbindung oder eine Kommunikationsverbindung zu einem internetfähigen Gerät herstellen. Steuer- und Auswertemittel der Vorrichtung können dazu eingerichtet sein, in Abhängigkeit eines über die Funkmittel empfangenen Auswahlbefehls den Schalter einzustellen. Gegenstand der Erfindung ist auch eine erfindungsgemäße Vorrichtung in Kombination mit dem oben beschriebenen Server.

Heizungs- und/oder Kühlanlagen können sich darin unterscheiden, welchen Strom sie problemlos der erfindungsgemäßen Vorrichtung zur Energieversorgung zuführen können. Die Stromstabilisierungsschaltung kann daher dazu gestaltet sein, eine auszugebende Stromhöhe variabel einstellen zu können. Steuer- und Auswertemittel der Vorrichtung können dazu eingerichtet sein, die auszugebende Stromhöhe abhängig von einer angeschlossenen Heizungs- und/oder Kühlanlage einzustellen.

Der Energiebedarf von Komponenten der erfindungsgemäßen Vorrichtung kann zeitlich stark schwanken. Dies kann beispielsweise durch den Betriebszustand von Funkmitteln oder einer Anzeige der Vorrichtung begründet sein. Würden diese Komponenten allein durch einen Strom über die Kommunikationsschnittstelle mit Energie versorgt werden, so könnte der durch die Stromstabilisierungsschaltung bereitgestellte Strom ungenügend sein. Ohne Stromstabilisierungsschaltung hingegen könnte ein rascher Anstieg des Energiebedarfs der Komponenten zu einer Stromhöhe führen, welche von der Heizungs- und/oder Kühlanlage als hoher Pegel eines Digitalsignals eingestuft würde.

Um eine ausreichende Stromversorgung auch dann zu gewährleisten, wenn der über die Stromstabilisierungsschaltung zugeführte Strom geringer ist als ein momentaner Strombedarf der Komponenten, kann zusätzlich eine Batterie zur momentanen Stromversorgung der Komponenten genutzt werden. Die Batterie wird als nur dann genutzt, wenn mehr Energie benötigt wird, als von der Stromstabilisierungsschaltung bereitgestellt wird.

Die Erfindung umfasst auch ein Heizungs- und/oder Kühlsystem mit einer Heizungs- und/oder Kühlanlage und einer erfindungsgemäßen Vorrichtung zum Steuern einer Heizungs- und/oder Kühlanlage. Die Vorrichtung ist im Betrieb mit ihrer Kommunikationsschnittstelle an die Heizungs- und/oder Kühlanlage angeschlossen.

Weitere Verfahrensvarianten ergeben sich durch bestimmungsgemäßen Gebrauch der beschriebenen Ausgestaltungen der erfindungsgemäßen Vorrichtung. Ebenso ergeben sich weitere Ausführungsformen der Vorrichtung aus den beschriebenen Verfahrensvarianten.

### KURZBESCHREIBUNG DER ZEICHNUNGEN

Merkmale und Eigenschaften der Erfindung werden nachstehend mit Bezug auf die beigefügten schematischen Figuren beschrieben. Hierbei zeigen:
- Fig. 1: ein Ausführungsbeispiel einer erfindungsgemäßen Vorrichtung, die an eine Heizungs- und/oder Kühlanlage angeschlossen ist;
- Fig. 2: einen Graphen einer Eingangsspannung an der Kommunikationsschnittstelle der Vorrichtung aus Fig. 1; und
- Fig. 3: einen Graphen eines Stroms an der Kommunikationsschnittstelle der Vorrichtung aus Fig. 1, wenn nicht die Stromstabilisierungsschaltung der Vorrichtung verwendet wird.

### DETAILLIERTE BESCHREIBUNG DER ZEICHNUNGEN

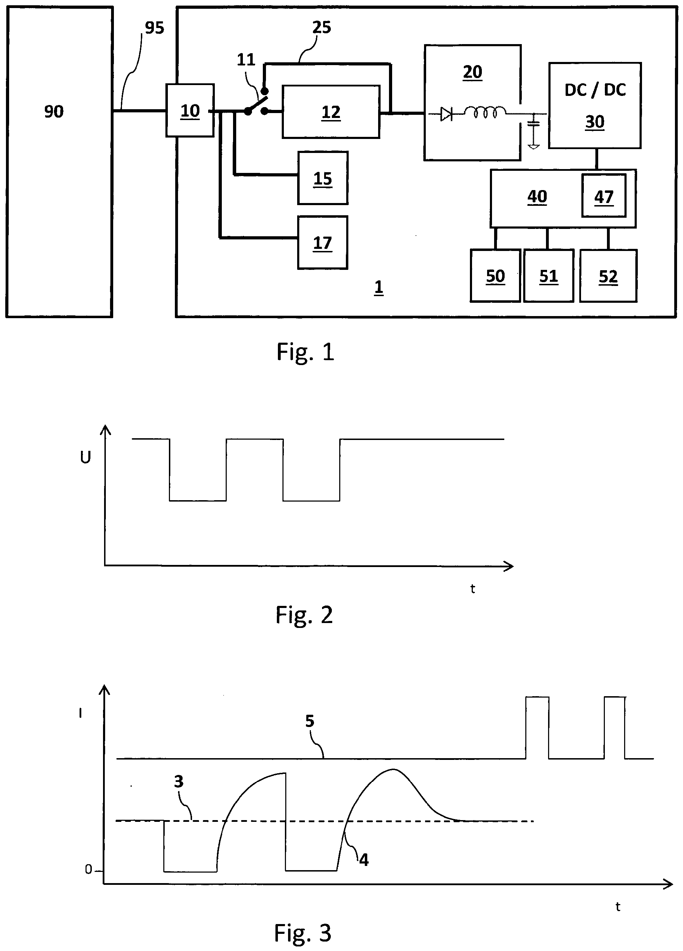

Ein Ausführungsbeispiel einer erfindungsgemäßen Vorrichtung 1 zum Steuern einer Heizungs- und/oder Kühlanlage ist schematisch in Fig. 1 gezeigt.

Die Vorrichtung 1 zum Steuern einer Heizungs- und/oder Kühlanlage ermittelt und/oder empfängt Informationen, die zur Steuerung einer Raumtemperatur in einem Gebäude verwendet werden. So kann die Vorrichtung 1 über einen Temperatursensor 51 zum Ermitteln einer Umgebungstemperatur verfügen. Auch Funkmittel 52 können vorhanden sein, durch welche Temperaturinformationen und andere Informationen betreffend die Steuerung der Raumtemperatur empfangen werden können. Beispielsweise können Informationen über eine Personenanwesenheit oder eine zukünftige Personenanwesenheit empfangen werden. Eine Raumtemperatur kann sodann abhängig davon verändert werden, ob Personen anwesend sind und/oder wann Personen eintreffen.

Zum Steuern einer Heizungs- und/oder Kühlanlage erzeugt die Vorrichtung 1 einen Steuerbefehl, welchen sie über eine Kommunikationsschnittstelle 10 ausgeben kann.

An diese ist eine elektrische Verbindung 95 zu einer zu steuernden Heizungs- und/oder Kühlanlage 90 anschließbar.

Die Heizungs- und/oder Kühlanlage 90 kann beispielsweise eine Heiztherme zur Gebäudeheizung sein. Auch beliebige andere Einrichtung zum Erwärmen einer Umgebung oder Klimaanlagen zum Kühlen eines Raums oder Gebäudes können hierunter aufgefasst werden.

Die Heizungs- und/oder Kühlanlage 90 ist zum Empfangen eines Steuerbefehls gestaltet, durch den sie ihren Heiz- oder Kühlbetrieb ändert. Eine konkrete Anweisungsart durch den Steuerbefehl ist von der Gestaltung der Heizungs- und/oder Kühlanlage 90 abhängig. Beispielsweise kann über den Steuerbefehl eine Heizkesseltemperatur oder eine andere einstellbare Temperatur der Heizungs- und/oder Kühlanlage 90 vorgegeben werden. Der Steuerbefehl kann auch ein Aktivieren und Deaktivieren von Teilen der Heizungs- und/oder Kühlanlage 90 angeben, etwa einer Heizeinrichtung der Heizungs- und/oder Kühlanlage 90.

Die Kommunikationsschnittstelle 10 dient außer zum Ausgeben eines Steuerbefehls auch zum Datenempfang und zur Energieversorgung der Vorrichtung 1. Zur Energieversorgung erzeugt die Heizungs- und/oder Kühlanlage 90 eine Spannung (nachfolgend Eingangsspannung) an der Kommunikationsschnittstelle 10.

Zur Signalübertragung modulieren manche Heizungs- und/oder Kühlanlagen 90 die Höhe der Eingangsspannung, um ein Digitalsignal mit abwechselnd hohen und niedrigen Pegeln zu senden. Andere Heizungs- und/oder Kühlanlagen nutzen hingegen eine Signalübertragung über eine Strommodulation.

Die Vorrichtung 1 kann zum Lesen von sowohl modulierten Strömen als auch modulierten Eingangsspannungen gestaltet sein.

Um die Eingangsspannung auf eine für die Stromversorgung von Komponenten der Vorrichtung 1 geeignete Gleichspannung umzuwandeln, weist die Vorrichtung 1 Spannungsumwandlungsmittel 30 auf. Herkömmliche Vorrichtungen zum Steuern einer Heizungs- und/oder Kühlanlage verwenden als Spannungsumwandlungsmittel einen Linearregler oder ähnliche Mittel, die einen niedrigen Wirkungsgrad von meist unter 20% haben. Dadurch ist die Wärmeentwicklung in der Vorrichtung groß, was eine negative Beeinflussung eines Temperatursensors der Vorrichtung zur Folge hat. Um dies zu vermeiden, wird bei der erfindungsgemäßen Vorrichtung 1 als Spannungsumwandlungsmittel ein DC-DC-Wandler 30 verwendet. Dieser hat einen hohen Wirkungsgrad, beispielsweise von über 80%. Die Wärmeentwicklung ist dadurch auch dann verhältnismäßig gering, wenn auf den DC-DC-Wandler 30 folgende Komponenten der Vorrichtung 1 einen hohen Energiebedarf haben. Vorteilhafterweise wird ein Temperatursensor 51 der Vorrichtung 1 wenig oder überhaupt nicht durch die geringe Wärmeentwicklung des DC-DC-Wandlers 30 beeinflusst.

Schwierigkeiten in der Verwendung eines DC-DC-Wandlers (Gleichspannungswandlers) 30 ergeben sich daraus, dass dieser eine verhältnismäßig hohe Eingangskapazität benötigt. Um diese bereitzustellen, ist mit dem Eingang des DC-DC-Wandlers 30 ein Kondensator verbunden (siehe Fig. 1). Der Kondensator kann zwischen dem Eingang des Gleichspannungswandlers 30 und Masse oder Erde verbunden sein. Ohne weitere Maßnahmen führt die hohe Eingangskapazität zu einer nachteiligen Beeinflussung der Eingangsspannung an der Kommunikationsschnittstelle 10, wenn diese von der Heizungs- und/oder Kühlanlage zur Signalübertragung moduliert wird.

Eine modulierte Eingangsspannung U ist idealisiert in Fig. 2 in Abhängigkeit der Zeit t aufgetragen. Wie dargestellt, ist die Modulation durch abwechselnd hohe und niedrige Spannungspegel gebildet. Der für den Gleichspannungswandler 30 erforderliche Kondensator bewirkt jedoch eine Glättung dieser Eingangsspannung. Am Kondensator ist ein zeitlicher Spannungsverlauf daher nicht wie in Fig. 2 dargestellt, sondern soweit geglättet, dass zwischen dem hohen und niedrigen Pegel nicht mehr zuverlässig unterschieden werden kann.

Um diese Problematik zu lösen, umfasst die Vorrichtung 1 erfindungsgemäß eine Entkopplungsschaltung 20. Diese ist zwischen der Kommunikationsschnittstelle 10 und dem Gleichspannungswandler 30 angeordnet. Sie bewirkt eine (zumindest teilweise) Entkopplung der Spannung vor und hinter dieser Schaltung 20. Eine Glättung der Eingangsspannung durch den Kondensator wird dadurch auf einen Bereich hinter der Entkopplungsschaltung 20 begrenzt; vor der Entkopplungsschaltung 20 ist die Eingangsschaltung hingegen nicht oder nur kaum durch den Kondensator verzerrt beziehungsweise geglättet. An der Kommunikationsschnittstelle 10 hat die Eingangsspannung daher im Wesentlichen einen zeitlichen Verlauf wie in Fig. 2 dargestellt, obwohl der Kondensator verwendet wird.

Signalauswertemittel 15 sind mit der Kommunikationsschnittstelle 10 verbunden, das heißt mit einer elektrischen Leitung zwischen der Kommunikationsschnittstelle 10 und der Entkopplungsschaltung 20. An dieser Stelle können die Signalauswertemittel 15 die modulierte Eingangsspannung weitgehend ohne Störeinflüsse des Kondensators messen.

Für die Entkopplungsfunktion kann die Entkopplungsschaltung 20 eine Diode und eine Spule umfassen. Diese sind schematisch in Fig. 2 gezeigt. Die Spule ist hinter die Diode geschaltet und kann direkt mit dem Kondensator verbunden sein, dessen Störeinflüsse entkoppelt werden sollen. Bei einer fallenden Flanke der in Fig. 2 gezeigten Eingangsspannung kommt die Sperrwirkung der Diode zum Tragen. Sie verhindert einen Strom zurück von dem Kondensator oder der Spule. Bei einer steigenden Flanke verlangsamt die Spule den Anstieg eines Ladestroms des Kondensators. Die Entkopplungsschaltung 20 hemmt demnach Lade- und Entladeströme des Kondensators, welche eine Glättung oder Verzerrung der Eingangsspannung bewirken würden. Durch die Einschränkung oder Verhinderung der Lade- und Entladeströme kommt es zu keiner oder einer nur geringen Beeinflussung der Eingangsspannung vor der Entkopplungsschaltung.

Während diese Entkopplungsschaltung 20 den Nachteil einer verzerrten Eingangsspannung beseitigt, kann es zu einer anderen Problematik kommen: Bei einer Modulation der Eingangsspannung bewirkt die Entkopplungsschaltung 20 zusammen mit dem Kondensator elektrische Ströme, welche für eine angeschlossene Heizungs- und/oder Kühlanlage 90 nachteilig sein können. Dies wird mit Bezug auf Fig. 3 näher erläutert. Idealerweise sollte trotz der Modulation der Eingangsspannung (Fig. 2) ein Strom im Wesentlichen konstant sein oder nur geringe Änderungen aufweisen. Dieser ideale Strom ist in Fig. 3 durch eine gestrichelte Linie 3 veranschaulicht. Bei einer fallenden Flanke der Eingangsspannung bleibt die Spannung hinter der Diode jedoch auf einem hohen Niveau, so dass die Diode in Sperrrichtung wirkt. Sie verhindert also einen Stromfluss. Dadurch sinkt der Strom vor der Entkopplungsschaltung sprunghaft, insbesondere auf 0 oder ungefähr 0. Dieser Stromverlauf ist in Fig. 3 durch die Stromkurve 4 gezeigt.

Erst bei einer steigenden Spannungsflanke wird die Diode nicht mehr in Sperrrichtung betrieben, so dass wieder ein Strom fließen kann. Wegen des Ladevorgangs des Kondensators nimmt der Strom jedoch einen verhältnismäßig hohen Wert an. Erst allmählich sinkt der Strom auf einen konstanten Wert (rechter Teil des Stromverlaufs 4), sofern die Eingangsspannung konstant bleibt.

Ohne weitere Maßnahmen würde dieser in Fig. 3 gezeigte Stromverlauf 4 von einer angeschlossenen Heizungs- und/oder Kühlanlage 90 wahrgenommen werden können. Dies führt bei manchen Heizungs- und/oder Kühlanlage 90 zu Fehlern.

Daher soll ein Stromverlauf 4 gemäß Fig. 3 vermieden werden. Dies wird mit einer Stromstabilisierungsschaltung 12 erreicht. Wie in Fig. 1 gezeigt, ist diese zwischen der Kommunikationsschnittstelle 10 und der Entkopplungsschaltung 20 verbunden. Sie nimmt einen (zumindest weitgehend) konstanten Strom auf, unabhängig von einer Änderung der Eingangsspannung. Ein Stromverlauf 4, wie in Fig. 3 dargestellt, wird somit verhindert. Vielmehr kann ein Stromverlauf gemäß Kurve 5 in Fig. 3 erzeugt werden. Hier hat der Strom einen etwa konstanten Wert, während die Heizungs- und/oder Kühlanlage 90 die Eingangsspannung moduliert. Ein nicht konstanter Stromwert wird nur dann erzeugt, wenn ein moduliertes Stromsignal übertragen werden soll (siehe rechten Teil des Stromverlaufs 5 in Fig. 3).

Durch die Stromstabilisierung können vorteilhafterweise Fehler an der Heizungs- und/oder Kühlanlage 90 vermieden werden. Allerdings führt der variable Stromverlauf 4 nicht bei allen Heizungs- und/oder Kühlanlagen 90 zu Fehlern. Daher kann ein Schalter 11 vorgesehen sein, mit welchem auswählbar ist, ob die Stromstabilisierungsschaltung 12 genutzt wird oder nicht. Im letzten Fall kann eine Umgehungsleitung 25 die Kommunikationsschnittstelle 10 direkt mit der Entkopplungsschaltung 20 verbinden.

Fig. 1 zeigt weiterhin Energieverteilungsmittel 40. Diese nutzen eine vom Gleichspannungswandler 30 bereitgestellte Gleichspannung zur Energieversorgung von Komponenten der Vorrichtung 1. Zur Veranschaulichung der mit Energie versorgten Komponenten sind ein Mikrocontroller 50 als Steuer- und Auswertemittel, ein Temperatursensor 51 und Funkmittel 52 dargestellt.

Sofern ein über den Gleichspannungswandler 30 bereitgestellter Strom nicht ausreicht, kann auch eine Batterie 47 vorübergehend zur Energieversorgung mitgenutzt werden. Der Mikrocontroller 50 kann steuern, wann zusätzlich die Batterie 47 genutzt werden soll.

In Fig. 1 sind schließlich auch Signalausgabemittel 17 der Vorrichtung 1 dargestellt. Diese sind mit einer elektrischen Leitung zwischen der Kommunikationsschnittstelle 10 und der Entkopplungsschaltung 20 beziehungsweise der Stromstabilisierungsschaltung 12 angeordnet. Die Signalausgabemittel 17 ermöglichen zur Ausgabe eines Steuerbefehls, an der Kommunikationsschnittstelle 10 entweder die Spannung oder einen Strom zu modulieren. Dieses modulierte elektrische Signal kann von der Heizungs- und/oder Kühlanlage erfasst werden.

Prinzipiell können auch mehrere Entkopplungsschaltungen vorhanden sein (nicht dargestellt). Diese können sich in ihren Dioden unterscheiden, insbesondere in der Dioden-Durchbruchspannung. Abhängig davon, wie hoch der Spannungsunterschied zwischen dem hohen und niedrigen Pegel der Eingangsspannung ist, kann sodann eine der Entkopplungsschaltungen ausgewählt und verwendet werden, bei welcher die Durchbruchspannung hoch genug ist, um einen Rückstrom zu vermeiden. Durch diese Auswahl kann ein unnötiger Energieverlust an der oder den Dioden in Durchlassrichtung vermieden werden.

Die erfindungsgemäße Vorrichtung 1 kann vorteilhafterweise auch dann fehlerfrei arbeiten, wenn die Heizungs- und/oder Kühlanlage die Eingangsspannung nicht moduliert und stattdessen über einen modulierten Strom ein Signal übertragt.

Zusammenfassend ermöglicht die Vorrichtung 1 eine besonders zuverlässige Kommunikation mit Heizungs- und/oder Kühlanlagen, wobei zudem eine Wärmeentwicklung sehr gering gehalten wird. Dadurch wird der Temperatursensor 51 nicht beeinträchtigt. Die geringe Wärmeentwicklung wird maßgeblich durch den Gleichspannungswandler 30 erreicht. Auswirkungen des Gleichspannungswandlers 30 auf eine modulierte Eingangsspannung werden durch die Entkopplungsschaltung 20 weitgehend vermieden. Unerwünschte Stromvariationen aufgrund der Entkopplungsschaltung werden wiederum durch eine Stromstabilisierungsschaltung verhindert.

## Patentansprüche

1. Vorrichtung zum Steuern einer Heizungs- und/oder Kühlanlage (90) mit
- einer Kommunikationsschnittstelle (10), an welche zur Datenübertragung und Energieversorgung eine Heizungs- und/oder Kühlanlage (90) anschließbar ist;
- Spannungsumwandlungsmitteln zum Umwandeln einer an der Kommunikationsschnittstelle (10) anliegenden Eingangsspannung auf eine hiervon verschiedene Gleichspannung;
- elektronischen Energieverteilungsmitteln (40) zur elektrischen Energieversorgung von elektronischen Komponenten der Vorrichtung mittels der von den Spannungsumwandlungsmitteln ausgegebenen Gleichspannung;
- Signalauswertemitteln (15) zum Auswerten eines von der Heizungs- und/oder Kühlanlage (90) an die Kommunikationsschnittstelle (10) gegebenen elektrischen Signals; und
- Signalausgabemitteln (17), welche für ein Ausgeben eines Steuerbefehls an die Heizungs- und/oder Kühlanlage (90) dazu eingerichtet sind, ein moduliertes elektrisches Signal an der Kommunikationsschnittstelle (10) zu erzeugen;
**dadurch gekennzeichnet,**
**dass** als Spannungsumwandlungsmittel ein DC-DC-Wandler (30) vorgesehen ist, wobei zum Erhöhen einer Eingangskapazität des DC-DC-Wandlers (30) an dessen Eingang mindestens ein Kondensator verbunden ist,
**dass** eine Entkopplungsschaltung (20) vorgesehen ist, welche zwischen der Kommunikationsschnittstelle (10) und dem DC-DC-Wandler (30) angeordnet und dazu eingerichtet ist, eine Beeinflussung der Eingangsspannung an der Kommunikationsschnittstelle (10) aufgrund des Kondensators zu verringern.

2. Vorrichtung nach Anspruch 1,
**dadurch gekennzeichnet,**
**dass** die Entkopplungsschaltung (20) eine Beeinflussung der Eingangsspannung an der Kommunikationsschnittstelle (10) aufgrund des Kondensators dadurch verringert, dass sie Ladeströme zum Kondensator abschwächt und Entladeströme des Kondensators zurück zur Kommunikationsschnittstelle (10) hemmt.

3. Vorrichtung nach Anspruch 2,
**dadurch gekennzeichnet,**
**dass** die Entkopplungsschaltung (20) zum Abschwächen von Ladeströmen des Kondensators mindestens eine Drosselspule aufweist.

4. Vorrichtung nach Anspruch 2 oder 3,
**dadurch gekennzeichnet,**
**dass** die Entkopplungsschaltung (20) zum Hemmen von Entladeströmen des Kondensators zurück zur Kommunikationsschnittstelle mindestens eine Diode aufweist, die vom Kondensator zur Kommunikationsschnittstelle in Sperrrichtung angeordnet ist.

5. Vorrichtung nach Anspruch 4,
**dadurch gekennzeichnet,**
**dass** die Drosselspule zwischen der Diode und dem Kondensator angeordnet ist.

6. Vorrichtung nach einem der vorhergehenden Ansprüche,
**dadurch gekennzeichnet,**
**dass** die Signalauswertemittel (15) zum Messen eines elektrischen Signals zwischen der Kommunikationsschnittstelle (10) und der Entkopplungsschaltung (20) angeordnet sind.

7. Vorrichtung nach einem der vorhergehenden Ansprüche,
**dadurch gekennzeichnet,**
**dass** eine Stromstabilisierungsschaltung (12) vorgesehen ist, welche zwischen der Kommunikationsschnittstelle (10) und der Entkopplungsschaltung (20) angeordnet ist.

8. Vorrichtung nach Anspruch 7,
**dadurch gekennzeichnet,**
**dass** eine Umgehungsleitung (25) vorhanden ist, welche die Kommunikationsschnittstelle (10) mit der Entkopplungsschaltung (20) verbindet und dabei die Stromstabilisierungsschaltung (12) umgeht, und dass ein Schalter (11) vorhanden ist, mit dem auswählbar ist, ob die Umgehungsleitung (25) oder die Stromstabilisierungsschaltung (12) genutzt wird.

9. Vorrichtung nach Anspruch 8,
**dadurch gekennzeichnet,**
**dass** Funkmittel (52) vorgesehen sind und
**dass** Steuer- und Auswertemittel (50) vorgesehen und dazu eingerichtet sind, in Abhängigkeit eines über die Funkmittel empfangenen Auswahlbefehls den Schalter (11) einzustellen.

10. Vorrichtung nach einem der Ansprüche 7 bis 9,
**dadurch gekennzeichnet,**
**dass** mit der Stromstabilisierungsschaltung (12) eine auszugebende Stromhöhe variabel einstellbar ist und
**dass** Steuer- und Auswertemittel (50) vorgesehen und dazu eingerichtet sind, die auszugebende Stromhöhe abhängig von einer angeschlossenen Heizungs- und/oder Kühlanlage (90) einzustellen.

11. Heizungs- und/oder Kühlsystem mit
einer Heizungs- und/oder Kühlanlage (90) und
einer Vorrichtung nach einem der Ansprüche 1 bis 10,
wobei die Vorrichtung mit ihrer Kommunikationsschnittstelle (10) an die Heizungs- und/oder Kühlanlage (90) angeschlossen ist.

12. Verfahren zum Steuern einer Heizungs- und/oder Kühlanlage (90), insbesondere mittels einer Vorrichtung nach einem der vorhergehenden Ansprüche,
wobei zumindest die folgenden Schritte durchgeführt werden:
- Erzeugen einer Eingangsspannung an einer Kommunikationsschnittstelle (10) der Vorrichtung durch eine an die Kommunikationsschnittstelle (10) angeschlossene Heizungs- und/oder Kühlanlage (90);
- Umwandeln der Eingangsspannung mit Spannungsumwandlungsmitteln auf eine hiervon verschiedene Gleichspannung;
- Bereitstellen einer Energieversorgung von Komponenten der Vorrichtung über die von den Spannungsumwandlungsmitteln ausgegebene Gleichspannung;
- Auswerten eines von der Heizungs- und/oder Kühlanlage (90) an die Kommunikationsschnittstelle (10) gegebenen elektrischen Signals; und
- Ausgeben eines Steuerbefehls an die Heizungs- und/oder Kühlanlage (90), indem Signalausgabemittel der Vorrichtung ein moduliertes elektrisches Signal an der Kommunikationsschnittstelle (10) erzeugen;
**gekennzeichnet durch**:
- Verwenden eines DC-DC-Wandlers (30) als Spannungsumwandlungsmittel, wobei zum Erhöhen einer Eingangskapazität des DC-DC-Wandlers (30) an dessen Eingang mindestens ein Kondensator verbunden ist; und
- Verwenden einer Entkopplungsschaltung (20) zwischen der Kommunikationsschnittstelle (10) und dem DC-DC-Wandler (30), wobei die Entkopplungsschaltung (20) dazu eingerichtet ist, eine Beeinflussung der Eingangsspannung an der Kommunikationsschnittstelle (10) aufgrund des Kondensators zu verringern.

13. Verfahren nach Anspruch 12,
**dadurch gekennzeichnet,**
**dass** mit einer Stromstabilisierungsschaltung (12) ein Strom zur Energieversorgung von Komponenten der Vorrichtung eingestellt wird und dass Komponenten der Vorrichtung außer über die Stromstabilisierungsschaltung (12) zusätzlich durch eine Batterie (47) mit Strom versorgt werden, wenn ein momentaner Strombedarf der Komponenten den von der Stromstabilisierungsschaltung (12) bereitgestellten Strom überschreitet.

## Claims

1. A device for controlling a heating and/or cooling system (90) comprising
- a communication interface (10) at which a heating and/or cooling system (90) is connectable for data transfer and energy supply;
- voltage conversion means for converting an input voltage applied at the communication interface (10) into a direct voltage differing from the input voltage;
- electronic energy distribution means (40) for electric power supply of electronic components of the device by means of the direct voltage output of the voltage conversion means;
- signal evaluation means (15) for evaluating an electric signal transmitted from the heating and/or cooling system (90) to the communication interface (10); and
- signal outputting means (17) which are configured to generate a modulated electric signal at the communication interface (10) for outputting a control command to the heating and/or cooling system (90);
**characterized in that**
a DC-DC converter (30) is provided as the voltage conversion means, wherein at least one capacitor is connected to the input of the DC-DC converter (30) to increase an input capacity of the DC-DC converter (30),
a decoupling circuit (20) is provided, which is arranged between the communication interface (10) and the DC-DC converter (30) and configured to reduce an influence of the capacitor on the input voltage at the communication interface (10).

2. The device of claim 1,
**characterized in that**
the decoupling circuit (20) reduces an influence of the capacitor on the input voltage at the communication interface (10) by attenuating charging currents to the capacitor and inhibiting discharging currents from the capacitor back to the communication interface (10).

3. The device of claim 2,
**characterized in that**
the decoupling circuit (20) comprises at least one choke for attenuating charging currents of the capacitor.

4. The device of claim 2 or 3,
**characterized in that**
the decoupling circuit (20) comprises at least one diode for inhibiting discharging currents from the capacitor back to the communication interface, wherein the at least one diode is arranged in blocking direction from the capacitor to the communication interface.

5. The device of claim 4,
**characterized in that**
the choke is arranged between the diode and the capacitor.

6. The device of one of the preceding claims,
**characterized in that**
the signal evaluation means (15) are arranged for measuring an electrical signal between the communication interface (10) and the decoupling circuit (20).

7. The device of one of the preceding claims,
**characterized in that**
a current stabilization circuit (12) is provided which is arranged between the communication interface (10) and the decoupling circuit (20).

8. The device of claim 7,
**characterized in that**
a bypass line (25) is provided which connects the communication interface (10) with the decoupling circuit (20) and bypasses the current stabilization circuit (12), and
a switch (11) is provided with which it is selectable whether the bypass line (25) or the current stabilization circuit (12) is used.

9. The device of claim 8,
**characterized in that**
wireless transmission means (52) are provided and
control and evaluation means (50) are provided and configured to control the switch (11) in dependence of a selection command received through the wireless transmission means.

10. The device of one of the claims 7 to 9,
**characterized in that**
a current level to be output can be variably set with the current stabilization circuit (12) and
control and evaluation means (50) are provided and configured to set the current level to be output depending on a connected heating and/or cooling system (90).

11. A heating and/or cooling apparatus comprising
a heating and/or cooling system (90) and
a device of one of the claims 1 to 10,
wherein the device is connected with its communication interface (10) to the heating and/or cooling system (90).

12. A method for controlling a heating and/or cooling system (90), in particular by means of a device of one of the preceding claims,
wherein at least the following steps are carried out:
- generating an input voltage at a communication interface (10) of the device through a heating and/or cooling system (90) connected to the communication interface (10);
- converting the input voltage with voltage conversion means into a direct voltage differing from the input voltage;
- providing a power supply of components of the device by means of the direct voltage output by the voltage conversion means;
- evaluating an electrical signal transmitted from the heating and/or cooling system (90) to the communication interface (10); and
- outputting a control command to the heating and/or cooling system (90) by generating a modulated electrical signal at the communication interface (10) by means of signal outputting means of the device;
**characterized by**:
- using a DC-DC converter (30) as voltage conversion means, wherein at least one capacitor for increasing an input capacity of the DC-DC converter (30) is connected to its input; and
- using a decoupling circuit (20) between the communication interface (10) and the DC-DC converter (30), wherein the decoupling circuit (20) is configured to reduce an influence on the input voltage at the communication interface (10) due to the capacitor.

13. The method of claim 12,
**characterized in that**
a current for power supply of components of the device is set with a current stabilization circuit (12) and
components of the device are supplied with a current through a battery (47), in addition to the supply through the current stabilization circuit (12), if a momentary current demand of the components surpasses the current provided by the current stabilization circuit (12).

## Revendications

1. Dispositif pour la commande d'un système de chauffage et/ou de refroidissement (90) comprenant :
- une interface de communication (10) à laquelle un système de chauffage et/ou de refroidissement (90) peut être connecté pour la transmission de données et l'alimentation en énergie,
- des moyens de conversion de tension pour convertir une tension d'entrée appliquée à l'interface de communication (10) en une tension continue différente de la tension d'entrée,
- des moyens électroniques de distribution de l'énergie (40) pour alimenter en énergie électrique des composants électroniques du dispositif au moyen de la tension continue émise par les moyens de conversion de la tension,
- des moyens d'évaluation de signal (15) pour évaluer un signal électrique transmis à l'interface de communication (10) par le système de chauffage et/ou de refroidissement (90), et
- des moyens de sortie de signal (17) configurés pour générer un signal électrique modulé à l'interface de communication (10), afin d'émettre une commande de contrôle vers le système de chauffage et/ou de refroidissement (90),
**caractérisé en ce que**
un convertisseur CC-CC (30) est prévu comme moyen de conversion de tension, tandis qu'au moins un condensateur est connecté à l'entrée du convertisseur CC-CC (30), afin d'augmenter une capacité d'entrée du convertisseur CC-CC (30),
est prévu un circuit de découplage (20), qui est situé entre l'interface de communication (10) et le convertisseur CC-CC (30) et qui est configuré pour réduire une influence du condensateur sur la tension d'entrée à l'interface de communication (10).

2. Dispositif selon la revendication 1
**caractérisé en ce que**
le circuit de découplage (20) réduit une influence du condensateur sur la tension d'entrée à l'interface de communication (10) en affaiblissant les courants de charge vers le condensateur et en inhibant les courants de décharge du condensateur retournant à l'interface de communication (10).

3. Dispositif selon la revendication 2
**caractérisé en ce que**
le circuit de découplage (20) comporte au moins une bobine d'arrêt pour affaiblir les courants de charge du condensateur.

4. Dispositif selon la revendication 2 ou 3
**caractérisé en ce que**
le circuit de découplage (20) comporte au moins une diode pour inhiber les courants de décharge du condensateur de retour à l'interface de communication, tandis que la au moins une diode est située dans le sens de blocage du condensateur vers l'interface de communication.

5. Dispositif selon la revendication 4
**caractérisé en ce que**
la bobine d'arrêt est située entre la diode et le condensateur.

6. Dispositif selon une des revendications précédentes
**caractérisé en ce que**
les moyens d'évaluation du signal (15) pour mesurer un signal électrique sont situés entre l'interface de communication (10) et le circuit de découplage (20).

7. Dispositif selon une des revendications précédentes
**caractérisé en ce que**
un circuit de stabilisation du courant (12) est prévu, qui est situé entre l'interface de communication (10) et le circuit de découplage (20).

8. Dispositif selon la revendication 7
**caractérisé en ce que**
une ligne de contournement (25) est prévue, laquelle relie l'interface de communication (10) au circuit de découplage (20) et contourne ainsi le circuit de stabilisation du courant (12), et
un interrupteur (11) est prévu, avec lequel il est possible de choisir si la ligne de contournement (25) ou le circuit de stabilisation du courant (12) est utilisé.

9. Dispositif selon la revendication 8
**caractérisé en ce que**
des moyens de transmission dans fil (52) sont prévus et
des moyens de contrôle et d'évaluation (50) sont prévus et configurés pour contrôler le commutateur (11) en fonction d'une commande de sélection reçue par le biais des moyens de transmission sans fil.

10. Dispositif selon une des revendications 7 à 9
**caractérisé en ce que**
un niveau de courant à fournir peut être réglé de manière variable avec le circuit de stabilisation du courant (12), et
des moyens de contrôle et d'évaluation (50) sont prévus et configurés pour régler le niveau de courant à fournir en fonction d'un système de chauffage et/ou de refroidissement connecté (90).

11. Système de chauffage et/ou de refroidissement comprenant
un système de chauffage et/ou de refroidissement (90) et
un dispositif selon une des revendications 1 à 10
tandis que le dispositif est connecté avec son interface de communication (10) au système de chauffage et/ou de refroidissement (90).

12. Procédé de commande d'un système de chauffage et/ou de refroidissement (90), en particulier au moyen d'un dispositif selon l'une des revendications précédentes,
tandis qu'au moins les étapes suivantes sont réalisées :
- la production d'une tension d'entrée à une interface de communication (10) du dispositif par le biais d'un système de chauffage et/ou de refroidissement (90) connecté à l'interface de communication (10),
- la conversion de la tension d'entrée, grâce à des moyens de conversion de tension, en une tension continue différente de la tension d'entrée,
- la mise à disposition d'une alimentation en énergie de composants du dispositif via la tension continue fournie par les moyens de conversion de tension,
- l'évaluation d'un signal envoyé par le système de chauffage et/ou de refroidissement (90) à l'interface de communication (90), et
- l'émission d'un ordre de commande au système de chauffage et/ou de refroidissement (90) en générant un signal électrique modulé au niveau de l'interface de communication (10) par le biais de moyens de sortie de signal du dispositif,
**caractérisé par**
- l'utilisation d'un convertisseur CC-CC (30) comme moyen de conversion de tension, tandis qu'au moins un condensateur est connecté à une entrée dudit convertisseur CC-CC (30) pour augmenter une capacité d'entrée dudit convertisseur CC-CC (30), et
- l'utilisation d'un circuit de découplage (20) entre l'interface de communication (10) et le convertisseur CC-CC (30), tandis que le circuit de découplage (20) est configuré pour réduire une influence de la tension d'entrée à l'interface de communication (10) en raison du condensateur.

13. Procédé selon la revendication 12
**caractérisé en ce que**
un courant pour l'alimentation en énergie de composants du dispositif est réglé avec un circuit de stabilisation du courant (12), et
les composants du dispositif sont alimentés en courant par le biais d'une batterie (47), en plus de l'alimentation par le biais du circuit de stabilisation du courant (12), dès lors qu'une demande momentanée de courant des composants est supérieure au courant fourni par le circuit de stabilisation du courant (12).
